# EUROPEAN PATENT APPLICATION

(11) **EP 2 172 844 A1**
(43) Date of publication of application: **07.04.2010**
(21) Application number: 09171895.7
(22) Date of filing: 30.09.2009
(51) Int. Cl.: G06F 12/14

(54) **Memory protection method, information processing apparatus, program, and computer-readable storage medium**

(30) Priority: 01.10.2008 JP 2008256636
(71) Applicant: CANON KABUSHIKI KAISHA, Ohta-ku Tokyo 146-8501 (JP)
(72) Inventor: Kobayashi, Hidenori, Ohta-ku Tokyo (JP)
(74) Representative: Garner, Jonathan Charles Stapleton

(57) **Abstract**

A memory protection method for protecting a memory from an unauthorized access by a program, includes: executing area definition processing for dividing an undivided address space on the memory into a plurality of areas(11, S101∼S104); executing combining processing for temporarily combining the divided areas before calling a procedure of the program across the divided areas(13, S201); executing calling processing for calling the procedure after the areas are combined(14, S202); and executing restoring processing for restoring the combined areas to a state before the combining processing after execution of the called procedure(15, S203).

## Description

### BACKGROUND OF THE INVENTION

### Field of the Invention

The present invention relates to a memory protection method which protects a memory from an unauthorized access by a program, an information processing apparatus, a program, and a computer-readable storage medium.

### Description of the Related Art

In general, in an embedded system, a program can (directly) access all memory areas. For this reason, an overhead is suppressed to be small, but a memory cannot be protected from an unauthorized access caused by a bug of the program.

When such unauthorized access is generated, development efficiency lowers. That is, much labor and time are required to cover and test all execution sequences of complicated software. Note that an unauthorized access may often cause a failure only in a specific execution sequence. Since complicated software normally includes a plurality of logical modules, an unauthorized access often does not result in a failure before all the modules are integrated.

When a cause of a failure that has occurred in the system is an unauthorized access, it is difficult to specify the access as the cause. This is because such access may be specified if the failure readily reveals itself at the time of the unauthorized access, but the failure usually does not reveal itself instantly. For example, when many processes have been executed from when an unauthorized access was made until a failure actually occurs, it is difficult to specify the process as the source of the unauthorized access.

On the other hand, in a non-embedded system such as a workstation, in general, in order to protect a memory from an unauthorized access, a virtual address space unique to each program is used. In this case, a program which runs on a virtual address space cannot access memory areas which are not associated with that space. When the content of a virtual address space of another program is to be used, for example, an operating system (OS) intermediates message exchange between the programs on the different virtual address spaces. Also, a technique which changes an associated memory area from a virtual address space to permit an access to a memory area, an access to which is not permitted originally, is known (Japanese Patent Laid-Open No. 2005-209178).

However, an access to a protected memory area requires a large overhead, and considerably decreases the execution speed of the system. When messages are exchanged via the OS, a context of execution has to be switched to a program which is permitted to access the corresponding memory area. In addition, since message exchange requires copying of data, an overhead required for accesses is large.

On the other hand, when a plurality of memory areas are associated with a part of a virtual address space, for example, in a system which uses a cache that indexes virtual addresses, a process to flash and invalidate the cache every time the correspondence relationship with the memory areas is changed is required. Furthermore, when the correspondence relationship between virtual and physical addresses is cached, that cache also has to be invalidated. These operations increase an overhead required for accesses and decrease the execution speed after an access.

### SUMMARY OF THE INVENTION

The present invention enables to provide a technique, which suppresses an unauthorized access between divided areas on a memory, and reduces a decrease in execution speed of procedures across the areas.

According to a first aspect of the present invention there is provided a memory protection method according to claim 1.

According to a second aspect of the present invention there is provided an information processing apparatus according to claim 14.

According to a third aspect of the present invention there is provided a program according to claim 15.

Further features of the present invention will be apparent from the following description of exemplary embodiments with reference to the attached drawings.

### BRIEF DESCRIPTION OF THE DRAWINGS

Fig. 1 is a block diagram showing an example of the arrangement of an information processing apparatus 10;

Fig. 2 is a block diagram showing an example of the functional arrangement implemented by a CPU 101;

Fig. 3 is a first flowchart showing an example of the operation in the information processing apparatus 10;

Fig. 4 is a view showing an example of a protection function setting table 109;

Fig. 5 is a second flowchart showing an example of the operation in the information processing apparatus 10;

Figs. 6A and 6B are diagrams illustrating the relationships between a plurality of protection areas assured on a memory and accesses to these areas;

Fig. 7 is a block diagram showing an example of the arrangement of an information processing apparatus 10;

Fig. 8 is a block diagram showing an example of the functional arrangement implemented by a CPU 101;

Fig. 9 is a flowchart showing an example of the operation in the information processing apparatus 10;

Fig. 10 is a first view showing an example of a protection function setting table 109;

Fig. 11 is a second view showing an example of the protection function setting table 109;

Fig. 12 is a block diagram showing an example of the arrangement of an information processing apparatus 10;

Fig. 13 is a first flowchart showing an example of the operation in the information processing apparatus 10;

Fig. 14 is a first view showing an example of a protection function setting table 109;

Fig. 15 is a second view showing an example of the protection function setting table 109;

Fig. 16 is a third view showing an example of the protection function setting table 109;

Fig. 17 is a second flowchart showing an example of the operation in the information processing apparatus 10; and

Figs. 18A and 18B are views showing examples of an access authority holding table 113 included in the protection function setting table 109.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

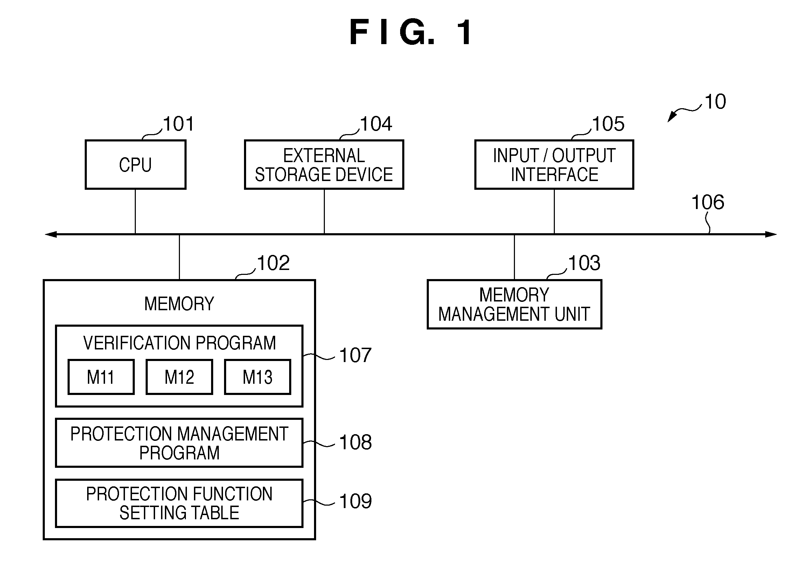

Fig. 1 is a block diagram showing an example of the arrangement of an information processing apparatus 10.

A CPU (Central Processing Unit) 101 controls the overall information processing apparatus 10.

A memory 102 includes a ROM (Read Only Memory) which stores programs and parameters that do not require any changes, and a RAM (Random Access Memory) which temporarily stores programs and data that are supplied from an external apparatus and the like.

An external storage device 104 includes a hard disk and memory card. Note that the external storage device 104 may include a flexible disk (FD), an optical disk such as a CD (Compact Disk), magnetic and optical cards, and an IC card, which are detachable from the information processing apparatus.

An input/output interface 105 inputs data into the information processing apparatus and outputs data to outside the apparatus. The input/output interface 105 is implemented by, for example, a user interface which interfaces between the information processing apparatus 10 and the user, a communication interface used to connect an external environment (e.g., a network), and the like. A system bus 106 connects the aforementioned units to be able to exchange data.

On the memory 102, various programs and data are mapped. A verification program 107 indicates a program which may include bugs that may cause unauthorized accesses. In this case, the verification program 107 includes three modules, that is, modules M11, M12, and M13. Assume that execution of the verification program 107 is started from the module M11 in this embodiment. Also, assume that the verification program 107 requires one task in this embodiment. That is, the verification program 107 does not require two or more tasks. It is noted that "task" may be called "thread" depending on environment in which the verification program 107 is used, for exemple in the UNIX OS environment. Procedure calls between modules arranged on different areas on the memory (to be referred to as public procedures hereinafter) are implemented by calling procedure calling processing with a protection area temporary combining function (to be simply referred to as procedure calling processing with a combining function hereinafter) in a protection management program 108. That is, assume that the verification program 107 describes procedures for calling this processing.

The protection management program 108 (memory protection program) includes procedures for implementing area definition processing and procedure calling processing with a combining function. A protection function setting table 109 which specifies predetermined setting information includes, for example, area definition information.

A memory management unit 103 functions as a memory management device which checks the authenticity of an access to the memory 102. The memory management unit 103 includes, for example, an MMU (Memory Management Unit) or an MPU (Memory Protection Unit). Note that the memory management unit 103 may be incorporated in the CPU 101. The memory management unit 103 operates in a privileged mode of the CPU 101. For example, when an access is made to an area on the memory, the access to which is not permitted, upon execution of the verification program 107, the memory management unit 103 detects that access processing as an unauthorized access. When an unauthorized access is detected, the memory management unit 103 generates an exception to the CPU 101. At this time, the memory management unit 103 holds information associated with the unauthorized access. For example, an address where the unauthorized access was made, and information indicating whether the unauthorized access is a read or write access are held. Upon generation of the exception, the CPU 101 reads out these pieces of information, and specifies a location where the unauthorized access was made.

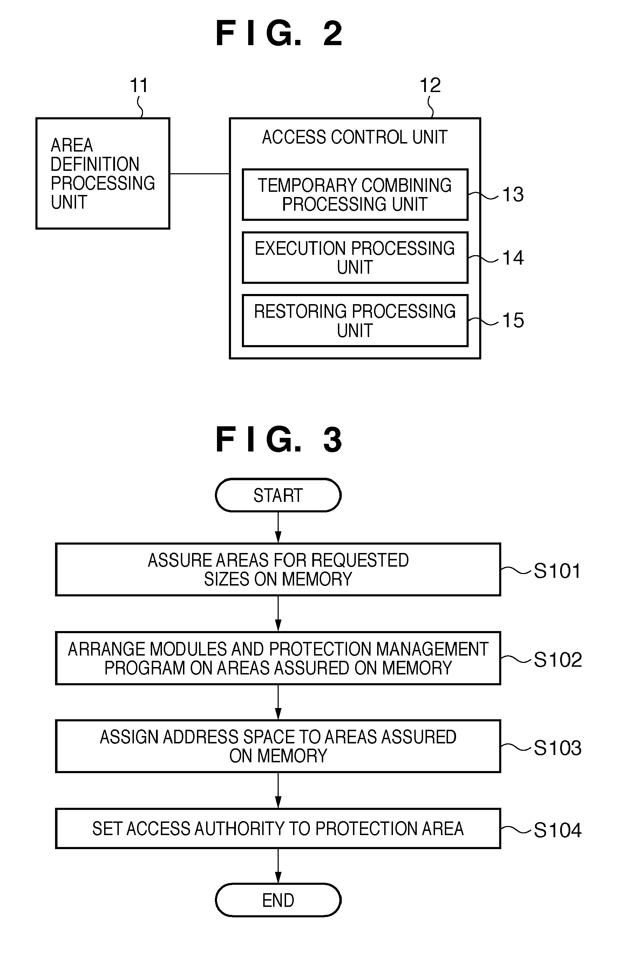

An example of the functional arrangement implemented by the CPU 101 shown in Fig. 1 will be described below with reference to Fig. 2. Note that functional components are implemented by the CPU 101 mainly when the CPU 101 reads out and executes the protection management program 108 stored (or mapped) in the memory 102.

The CPU 101 implements an area definition processing unit 11 and access control unit 12 as functional components.

The area definition processing unit 11 assures areas on the memory 102. The areas are assured with reference to the protection function setting table 109, and an undivided address space on the memory is divided into a plurality of areas to be assured. Each of these divided areas will also be referred to as a protection area hereinafter. Note that the area definition processing unit 11 arranges a module, assigns an address space, and sets an access authority with respect to each protection area.

The access control unit 12 has a function of controlling execution of processing across divided protection areas, and includes a temporary combining processing unit 13, execution processing unit 14, and restoring processing unit 15. The temporary combining processing unit 13 temporarily combines areas divided by the area definition processing unit 11. With this combining processing, for example, since an access source area and access destination area are temporarily combined, public procedures across the protection areas, which are called during this combining processing can directly access both the areas.

The execution processing unit 14 controls to call and execute public procedures executed across the combined areas. The restoring processing unit 15 restores the areas combined by the temporary combining processing unit 13 to a state before the combining processing after completion of the public procedures.

The operation in the information processing apparatus 10 shown in Fig. 1 will be described below. Assume that the memory management unit 103 is initialized to permit all accesses from the CPU 101 to the memory 102.

The CPU 101 always operates in a privileged mode. Then, an overhead required to set the memory management unit 103 is reduced. Note that the CPU 101 may operate in the privileged mode only when the memory management unit 103 is to be set. Also, the CPU 101 may always operate in a non-privileged mode as long as an access to the memory management unit 103 is made in the non-privileged mode.

The CPU 101 executes area definition processing according to the protection management program 108 before execution of the verification program 107. This processing is executed by calling the protection management program 108 in, for example, an initialization process of the information processing apparatus 10. Note that the area definition processing may be executed after execution of the verification program 107 is requested. That is, the execution timing of the area definition processing is not particularly limited as long as that processing is executed before memory access processing of the verification program 107.

Fig. 3 is a flowchart showing an example of the area definition processing. This processing is implemented when the CPU 101 reads out and executes the protection management program 108 stored (or mapped) in the memory 102.

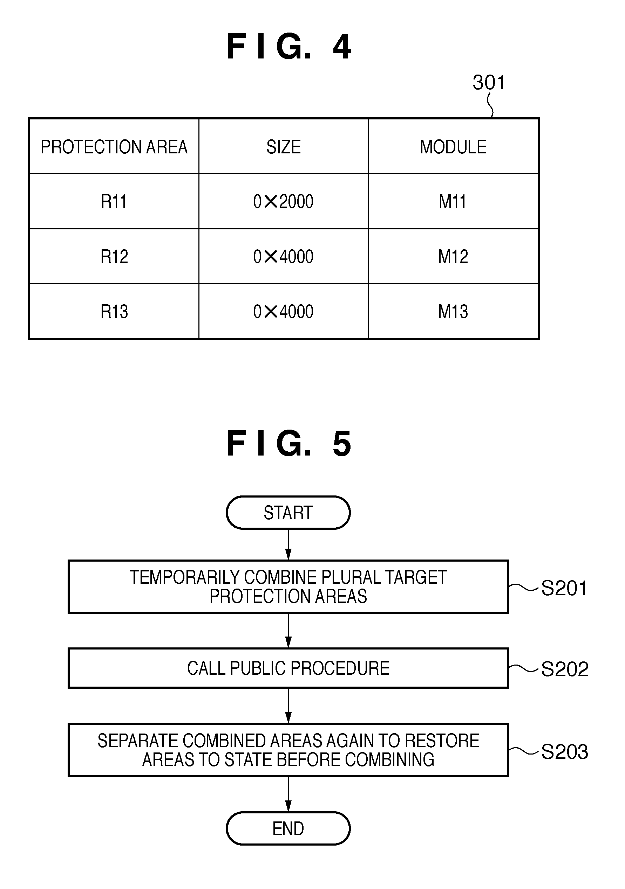

The CPU 101 controls the area definition processing unit 11 to assure areas corresponding to requested sizes on the memory 102 with reference to the protection function setting table 109 shown in Fig. 4 (S101). Note that each area to be assured may include a register mapped on the memory, if necessary. The protection function setting table 109 specifies the sizes of protection areas and modules to be arranged as area definition information 301, as shown in Fig. 4. In case of Fig. 4, protection areas R11, R12, and R13 are defined, and the size of each protection area is rounded up in a minimum unit recognized as a different area by the memory management unit 103. For example, a case will be examined below wherein a memory area specified by physical addresses 0x0000 to 0x9fff is available. In this case, when an area from 0x0000 to 0x1fff is assigned to the protection area R11, an area from 0x2000 to 0x5fff is assigned to the protection area R12, and an area from 0x6000 to 0x9fff is assigned to the protection area R13, the areas having the requested sizes can be assured on the memory.

The CPU 101 then controls the area definition processing unit 11 to arrange the modules and protection management program on the areas assured in step S101 (S102). According to the protection function setting table 109 shown in Fig. 4, the module M11 is arranged on the protection area R11, the module M12 is arranged on the protection area R12, and the module M13 is arranged on the protection area R13. Programs (respective modules) are arranged by copying the contents stored in the memory to the corresponding areas. In this case, even when the program itself is changed as a result of execution of the program, it can be restored to an initial state by copying the program again. Note that memory areas that store the respective modules may be assured by the process in step S101, and these areas may be directly used in the processes in step S103 and subsequent step. In this embodiment, the protection management program 108 required to call procedures between the protection areas and the module M11 are arranged on the single protection area R11. This to allow the module M11, which is executed first in the verification program 107, to call the protection management program 108. Note that only processing (program) required to call procedures between the protection areas may be separated, and may be arranged on the protection area R11. Also, another protection area where no module is arranged may be prepared, and the protection management program 108 may be arranged there. In this case, accesses from the module that requires procedure calls between the protection areas may be permitted with respect to the area where the protection management program 108 is arranged.

The CPU 101 controls the area definition processing unit 11 to assign address spaces to the areas assured in step S101 (S103). The address spaces are assigned by setting the memory management unit 103. Note that the address spaces to be assigned are those used when the CPU 101 executes various kinds of control. Note that each address space to be assigned is matched with a physical address space in this embodiment. In such case, when a bug is found in the verification program 107, an address used by the CPU 101 can be directly used, thus allowing easy debugging. Also, an MPU without any address conversion function may be used as the memory management unit 103. When a virtual address space is defined, even when the module to be arranged on the protection area cannot be arranged on a continuous physical address space, it can be handled as a continuous protection area on the virtual address space. Note that the physical address space and virtual address space may be defined as different spaces, as a matter of course.

Finally, the CPU 101 controls the area definition processing unit 11 to set an access authority to the protection area (S104). The access authority is set for the area where the module, which is executed first at the beginning of the verification program 107, is arranged (in this case, the module M11). Note that the access authority can be set by setting it in the memory management unit 103. That is, the CPU 101 sets the memory management unit 103 to permit read and write accesses to an address range from 0x0000 to 0x1fff assigned to the protection area R11 (where the module M11 is arranged). After such setting, the memory management unit 103 checks the authenticity of an access by the verification program 107 based on an address provided by the CPU 101. Then, the memory management unit 103 can detect an access to an address failing outside the above range as an unauthorized access.

In this way, the area definition processing ends. After the end of the area definition processing, for example, when the size of each protection area is required to be increased by dynamic memory assignment, the protection area can be re-defined by changing the setting in the memory management unit 103.

Fig. 5 is a flowchart showing an example of the procedure calling processing with the combining function. This processing is implemented when the CPU 101 reads out and executes the protection management program 108 stored (or mapped) in the memory 102. The procedure calling processing with the combining function is executed after the aforementioned area definition processing shown in Fig. 3. The procedure calling processing with the combining function is started, for example, when the verification program 107 is executed to call procedures for executing the protection management program 108 (more specifically, the procedure calling processing with the combining function).

The CPU 101 controls the temporary combining processing unit 13 to temporarily combine a plurality of target protection areas (S201). That is, the CPU 101 temporarily combines the protection area where the module M11 (a module as an origin of execution) and the protection management program 108 are arranged, and the protection area where the module including public procedures is arranged. More specifically, the CPU 101 changes the setting in the memory management unit 103 to set the same access authority as that set for the protection area where the protection management program 108 and the like are arranged to the protection area where the module including public procedures is arranged. As a consequence, the two protection areas are combined, and the module M11 and protection management program 108 are permitted to access the protection area where the module including public procedures is arranged.

After the areas are combined, the CPU 101 controls the execution processing unit 14 to call public procedures (S202). After completion of processing based on the public procedures, the CPU 101 controls the restoring processing unit 15 to separate the areas combined in step S201 again, that is, to restore the areas before the combining processing (S203). Note that this processing is implemented by changing the setting in the memory management unit 103 as in step S201 described above. Hence, an access to the protection area as an access destination of the public procedures is inhibited again.

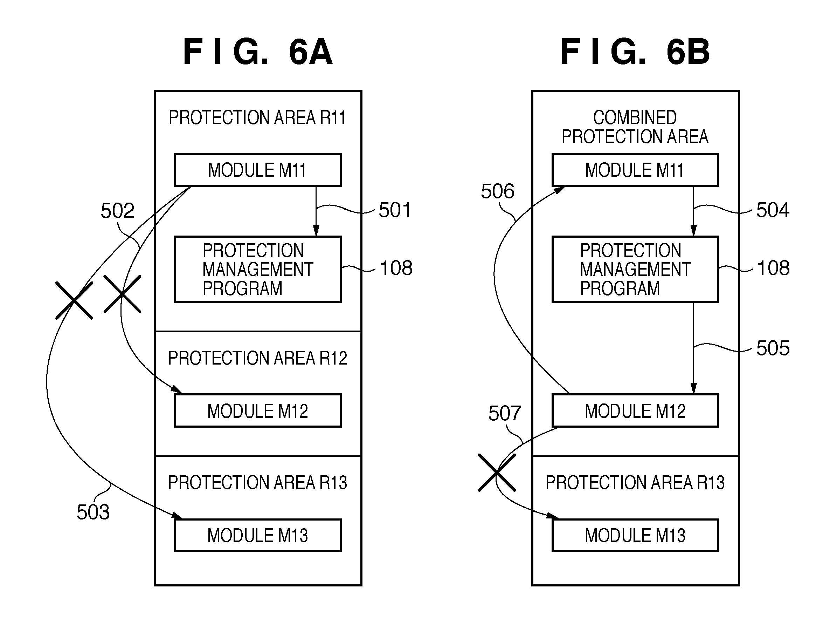

Figs. 6A and 6B are diagrams illustrating the relationships between the plurality of protection areas assured on the memory and accesses to these areas.

The protection areas are in a state shown in Fig. 6A before execution of the procedure calling processing with the combining function. In the state shown in Fig. 6A, an access 501 from the module M11 arranged on the protection area R11 to the protection management program 108 stored in the same protection area is permitted. However, an access 502 from the module M11 to the module M12 arranged on the protection area R12 and an access 503 from the module M11 to the module M13 arranged on the protection area R13 are inhibited.
That is, the accesses 502 and 503 are detected as unauthorized accesses.

On the other hand, while the procedure calling processing with the combining function is executed, the protection areas are in a state shown in Fig. 6B. In the state shown in Fig. 6B, the CPU 101 combines the protection areas R11 and R12 according to the protection management program 108. A public procedure call made in this state corresponds to an access 505.
An access between the modules arranged on the protection areas R11 and R12 is permitted. Therefore, an access 506 is detected as an authorized access. Note that an access 507 from the module M12 to the non-combined protection area R13 is detected as an unauthorized access. After completion of the public procedures, when the CPU 101 executes the area separation processing according to the protection management program 108, the protection areas R11 and R12 are separated again. As a result, the protection areas are restored to the state shown in Fig. 6A.

As described above, according to this embodiment, an unauthorized access between divided areas on the memory can be suppressed, and a decrease in execution speed of procedures across the areas can be reduced. Also, since the definition information associated with the protection areas is separated as the protection function setting table 109 from the verification program 107, the actual sizes of the protection areas and memory areas to be arranged can be flexibly set.

Another embodiment will be described below. This embodiment will explain a case wherein processing is executed for a program including no description. For example, a program after the verification process corresponds to such program.

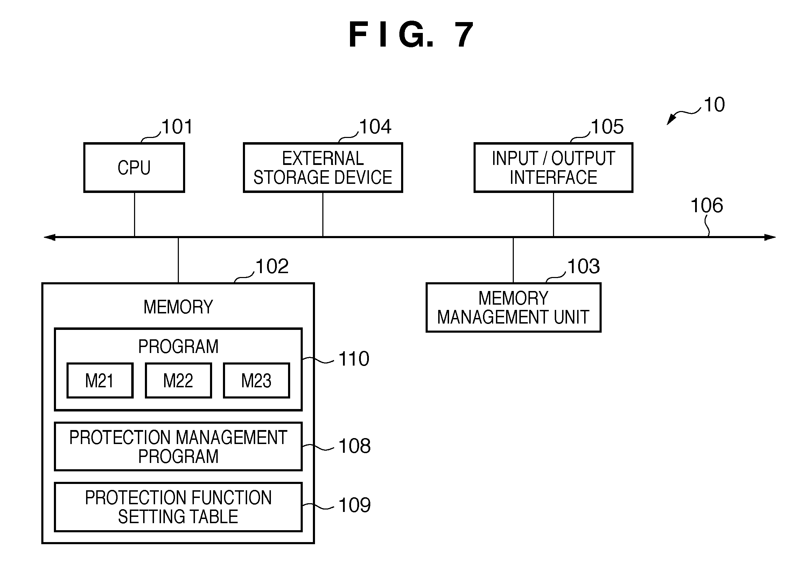

Fig. 7 is a block diagram showing an example of the arrangement of an information processing apparatus 10 according to this embodiment. Note that the same reference numerals denote components having the same functions as in Fig. 1, and a repetitive description thereof will be avoided. A program 110 does not describe any procedure for calling procedure calling processing with a combining function of a protection management program 108. Modules M21, M22, and M23 configure the program 110. The protection management program 108 includes procedures for executing procedure call conversion processing.

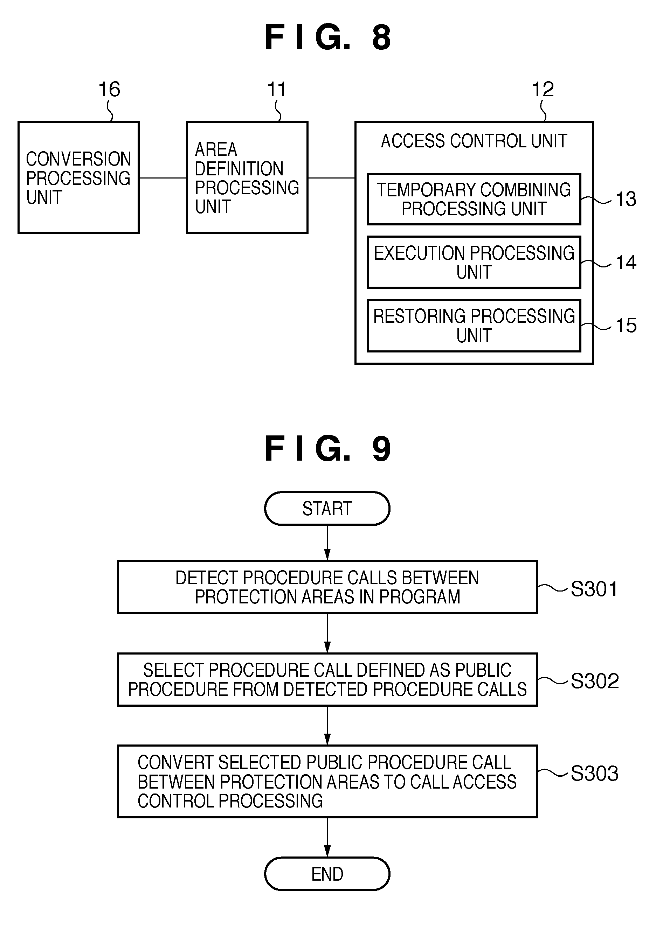

An example of the functional arrangement implemented by a CPU 101 according to this embodiment will be described below with reference to Fig. 8. Note that the functional arrangement is implemented by the CPU 101 mainly when the CPU 101 reads out and executes the protection management program 108 stored (or mapped) in the memory 102.

The CPU 101 implements a conversion processing unit 16 as a new functional component in addition to those in the first embodiment. Note that the same reference numerals denote components having the same functions as in Fig. 2 used to describe the first embodiment.

The conversion processing unit 16 converts the process content of the program 110. More specifically, the conversion processing unit 16 detects procedures defined as public procedures from the program 110, and converts these procedures to those which call the procedure calling processing with the combining function of the protection management program 108.

The operation in the information processing apparatus 10 will be described below.

Fig. 9 is a flowchart showing an example of the procedure call conversion processing. The procedure call conversion processing is executed before execution of area definition processing.

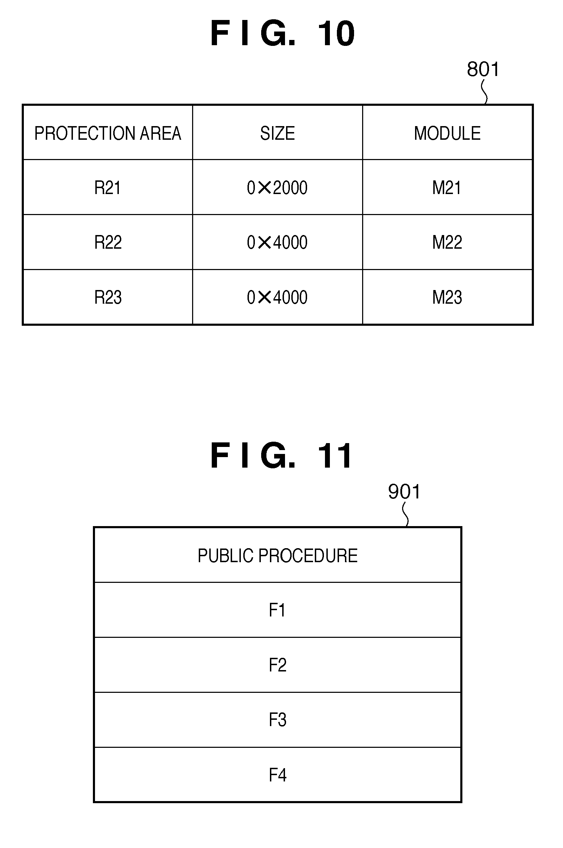

The CPU 101 controls the conversion processing unit 16 to detect procedure calls between protection areas in the program 110 based on a protection function setting table 109 (S301). The protection function setting table 109 according to the second embodiment defines sizes of protection areas, and modules to be arranged as area definition information 801, as shown in Fig. 10. In this case, all procedure calls to different modules are detected as those between the protection areas.

The CPU 101 selects procedures defined as public procedures from the detected procedure calls between the protection areas with reference to the protection function setting table 109 (S302). Note that the protection function setting table 109 according to this embodiment includes public procedure definition information 901 shown in Fig. 11 in addition to the aforementioned area definition information. The public procedure definition information 901 holds a list of names of public procedures those accesses from external modules are permitted in respective modules. For example, if a procedure F1 is detected in step S301, this procedure F1 is selected as a procedure to be converted in step S302. On the other hand, if a procedure F5 is detected in step S301, the procedure F5 is not selected in step S302 since it is not included in the public procedure definition information 901. That is, upon execution of the program 110, a call to the procedure F5 is detected as an unauthorized access. In this way, the procedure call conversion processing has a merit of detecting some unauthorized accesses without executing the program 110.

The CPU 101 converts the public procedure calls between the protection areas selected in step S302 into procedures for executing the procedure calling processing with the combining function (S303). Each procedure call is converted at a location where the public procedure is called in source codes of the program 110. For example, at this location, a procedure name referred to by the procedure call is replaced by a reference name of a procedure that implements the procedure calling processing with the combining function included in the protection management program 108. When compile and link processes are required before execution of the program 110, an external reference procedure name (symbol name) in an object code generated by the compile process is replaced by the reference name of the procedure that implements the procedure calling processing with the combining function before the link process. In this way as well, the procedure call can be converted. Then, the procedure call conversion processing ends.

In the aforementioned processing shown in Fig. 9, all procedures are simultaneously converted before execution of the program. Alternatively, a procedure required during execution of the program may be converted as needed.

The procedures that implement the procedure calling processing with the combining function included in the protection management program 108 can also be generated using the public procedure definition information 901. All the procedure calls in the procedure calling processing with the combining function have the same structure. That is, the procedure calls have the structure in which public procedures are called between a procedure which implements area combining processing and that which implements separation processing required to restore the combined areas. As described above, the protection area combining processing is implemented in step S201, and the protection area separation processing is implemented in step S203. Thus, only one procedure having this structure is prepared as a template, and public procedures called by this template are changed to those defined in the public procedure definition information 901. The procedure calling processing with the combining function can be generated by generating this for each public procedure.

Note that the procedure call conversion processing and procedure calling processing with the combining function may be executed by an information processing apparatus different from that shown in Fig. 7. In this case, the information processing apparatus which executes the procedure call conversion processing and procedure calling processing with the combining function need not have any memory management device.

As described above, according to this embodiment, the program has a backward compatibility. That is, upon application of the processing according to this embodiment, the description of the program need not be newly changed. Also, modules to be arranged on the protection areas can be changed without changing the program.

Still another embodiment will be described below. This embodiment will explain a verification program which executes a program by two or more tasks.

If a memory management unit 103 holds access authority settings for respective tasks and can determine a task that made an access, the same access management as in the above embodiments can be implemented. However, in general, it is required to dynamically change the settings of a memory management device by software. Hence, in this embodiment, accesses for respective tasks are managed using multitasking provided by an operating system (OS).

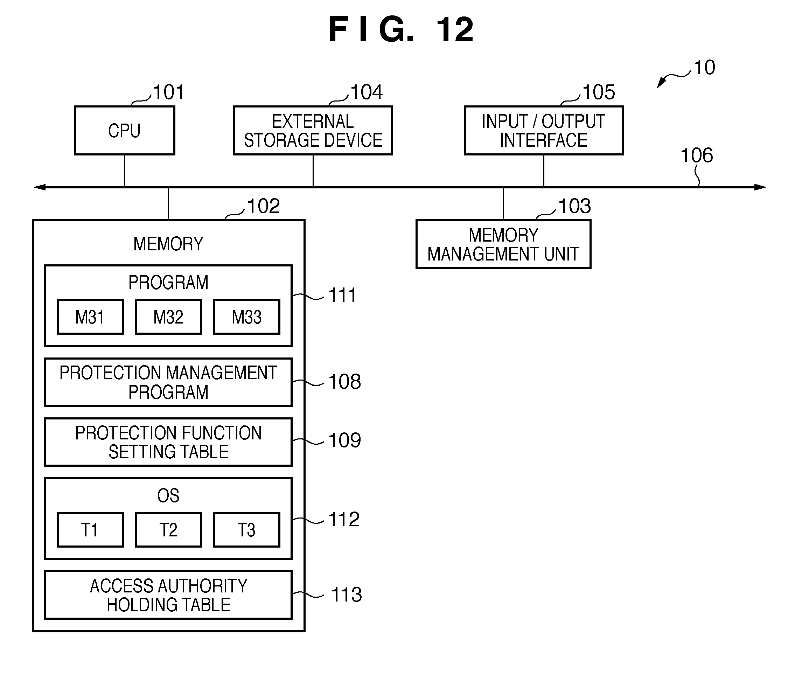

Fig. 12 is a block diagram showing an example of the arrangement of an information processing apparatus 10 according to this embodiment. Note that the same reference numerals denote components having the same functions as in the aforementioned components, and a description thereof will not be repeated.

A program 111 on a memory 102 includes modules M31, M32, and M33, and each of these modules requires one task. The tasks are provided by an OS 112. Of these tasks, a task T1 is assigned to execution of the module M31, a task T2 is assigned to execution of the module M32, and a task T3 is assigned to execution of the module M33. On the memory 102, an access authority holding table 113 which holds combined states of protection areas for respective tasks is stored.

The operation in the information processing apparatus 10 of this embodiment will be described below.

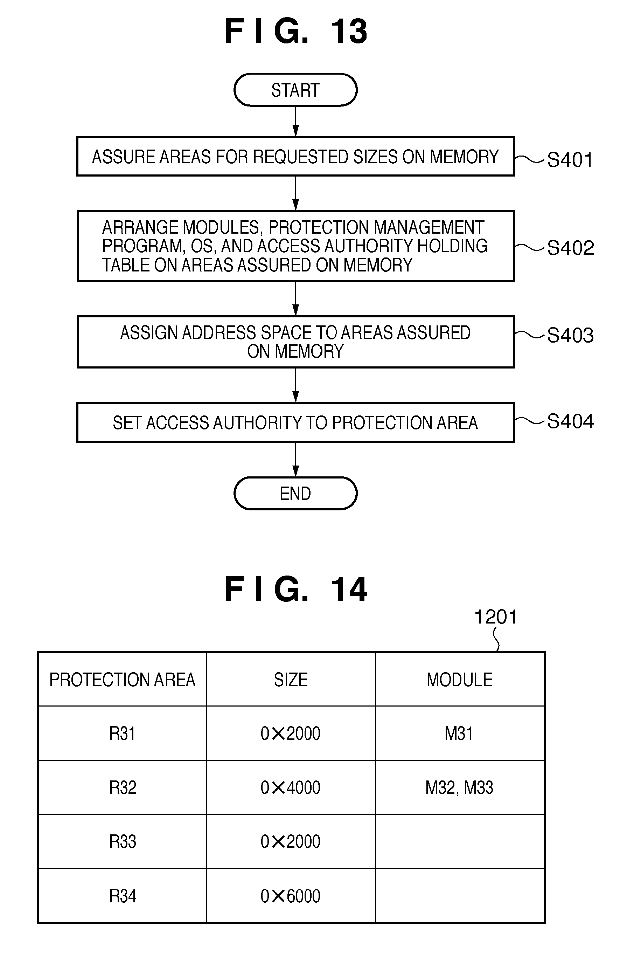

Fig. 13 is a flowchart showing an example of area definition processing. This processing is implemented when the CPU 101 reads out and executes a protection management program 108 stored (or mapped) in the memory 102. Note that only a process different from Fig. 3 will be explained. A difference lies in a process in step S402. As for other processes, steps S401, S403, and S404 are respectively the same as steps S101, S103, and S104 shown in Fig. 3.

In step S402, the CPU 101 controls an area definition processing unit 11 to arrange the modules, protection management program, OS, and access authority holding table on areas assured in step S401. That is, in addition to the process in step S102, the OS and access authority holding table are arranged on the protection areas.

The sequence of the area definition processing has been described.

An example of a protection function setting table 109 will be described below with reference to Figs. 14 to 16.

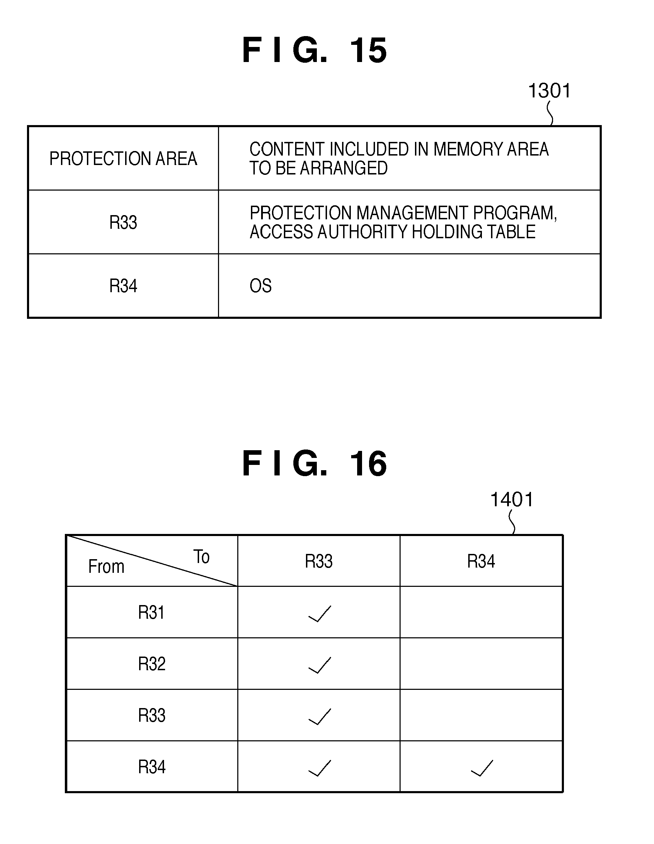

Fig. 14 shows an example of area definition information 1201. For protection areas where no modules are arranged (areas R33 and R34 in this case), areas where the protection management program 108, OS 112, and access authority holding table 113 are to be arranged are decided using arrangement definition information included in the protection function setting table 109. Fig. 15 shows an example of arrangement definition information 1301. According to the arrangement definition information 1301 shown in Fig. 15, the protection management program 108 and access authority holding table 113 are arranged on the protection area R33, and the OS 112 is arranged on the protection area R34.

Access authorities for the protection areas R33 and R34 are set based on access authority definition information 1401 included in the protection function setting table 109. Fig. 16 shows an example of the access authority definition information 1401. Each check symbol in the access authority definition information 1401 shown in Fig. 16 indicates that an access is permitted. For example, the access authority definition information 1401 indicates that accesses to the protection area R33 from all the protection areas are permitted.

An unauthorized access cannot be detected from an area for which accesses from all the areas are permitted like the protection area R33. However, accesses to the protection area R33 can be made at high speed. When the protection area R33 is assured on a ROM, there is no danger to rewrite a content by unauthorized accesses.

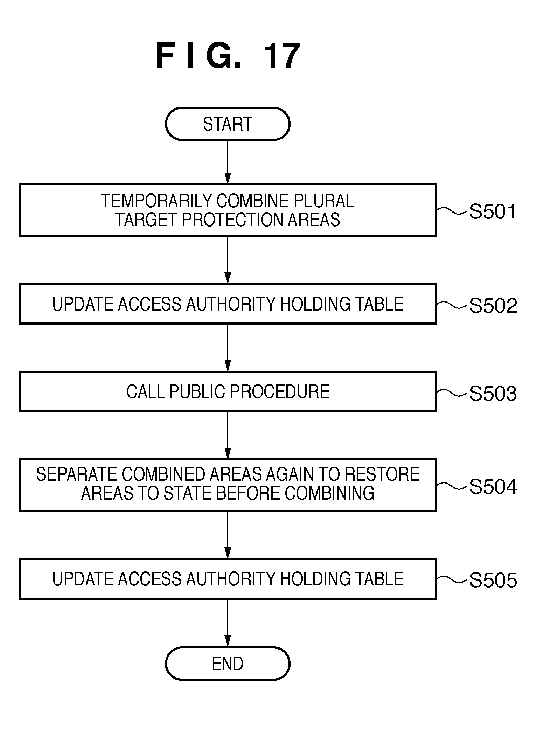

Fig. 17 is a flowchart showing an example of procedure calling processing with a combining function according to the third embodiment. This processing is implemented when the CPU 101 reads out and executes the protection management program 108 stored (or mapped) in the memory 102. The procedure calling processing with the combining function is executed after the aforementioned area definition processing shown in Fig. 13. The procedure calling processing with the combining function is started, for example, when the program 111 is executed, and procedures that execute the protection management program 108 (procedure calling processing with the combining function) are called. Note that only processes different from Fig. 5 in the first embodiment will be explained. Differences lie in processes of steps S502 and S504. As for other processes, steps S501, S503, and S505 are respectively the same as steps S201, S202, and S203 shown in Fig. 5.

In step S502, the CPU 101 updates the access authority holding table 113 based on the result in step S501 (S502). After that, the CPU 101 calls public procedures (S503). Upon completion of processing based on the procedures, the CPU 101 separates the areas combined in step S501 again to restore them to a state before combination (S504). Then, the CPU 101 updates the access authority holding table 113 again based on the result in step S504 (S505). Note that context switching is inhibited after the start of the process in step S501 until completion of the process in step S502. Likewise, context switching is inhibited after the start of the process in step S504 until completion of the process in step S505. Context switching can be inhibited using a function of the OS.

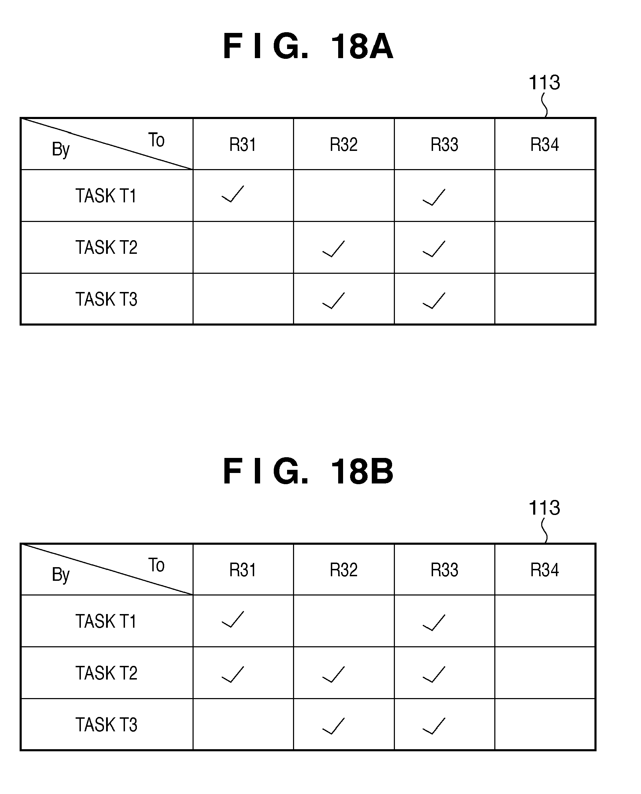

Figs. 18A and 18B show the access authority holding table 113 which holds the combined states of the protection areas for respective tasks. Each check symbol in the access authority holding table 113 indicates that an access is permitted. Note that an embodiment of changing the access authority holding table 113 when the task T2 executes the procedure calling processing with the combining function to the protection area R31 will be explained.

The access authority holding table 113 shown in Fig. 18A is in a state before execution of the procedure calling processing with the combining function. If an access from the task T2 to the protection area R31 is permitted in step S501 shown in Fig. 17, the access authority holding table 113 is changed from the state shown in Fig. 18A to that shown in Fig. 18B in step S502. After that, if an access from the task T2 to the protection area R31 is inhibited in step S504, the access authority holding table 113 is changed from the state shown in Fig. 18B to that shown in Fig. 18A in step S505.

Operations executed when public procedures are called in step S503, and the OS 112 executes context switching during execution of the public procedures to transit execution from the task T2 to the task T3 will be described below.

Assume that, for example, the access authority holding table 113 is in the state shown in Fig. 18B before context switching. According to Fig. 18B, an access to the protection area R31 by the task T1 and that to the protection area R31 by the task T2, which is executed after context switching, are permitted. If the settings in the memory management unit 103 are not changed by context switching, the task T2 after switching can access the protection area R31 without executing any procedure calling processing with the combining function. Therefore, even when a module executed by the task T2 includes a bug that causes an unauthorized access, it cannot be detected.

To prevent this, the OS 112 changes the settings in the memory management unit 103 based on the access authority holding table 113 in context switching to inhibit an access to the protection area R31. Then, after switching, when the task T2 accesses the protection area R31 without executing the procedure calling processing with the combining function to the protection area R31, that access is detected as an unauthorized access. With this control, even when the module executed by the task T2 includes a bug that causes an unauthorized access, it can be detected.

As described above, according to this embodiment, the information processing apparatus which executes a program that requires a plurality of tasks can execute the same processing as in the aforementioned embodiments. Using the protection areas where no modules are arranged, a memory area that stores the OS can also be protected. Note that programs and data (for example, a common library) other than the OS can be arranged on the protection areas where no modules are arranged, and can be protected, needless to say.

Note that the present invention is not limited to the embodiments described above and illustrated in the drawings, and various modifications can be appropriately made without departing from the scope of the invention.

According to the present invention, an unauthorized access between divided areas on the memory can be suppressed, and a decrease in execution speed of procedures across these areas can be reduced.

### (Other Embodiments)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable storage medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A memory protection method for protecting a memory from an unauthorized access by a program, comprising:
executing area definition processing for dividing an undivided address space on the memory into a plurality of areas(11, S101∼S104);
executing combining processing for temporarily combining at least two of the divided areas in response to a procedure of the program requiring access across the at least two areas(13, S201);
executing calling processing for calling the procedure after the areas are combined in the combining processing (14, S202); and
executing restoring processing for restoring the combined areas to a state before the combining processing after execution of the procedure called in the calling processing (15, S203).

2. A method according to claim 1, wherein the program includes a plurality of procedures, and has code for calling the combining processing before calling the procedure across the divided areas, and
the combining processing is executed upon being called by the program (S201, Fig.6B).

3. A method according to claim 1 or claim 2, further comprising:
executing memory management for determining authenticity of an access to the memory by the program (S103),
wherein, in a case that an access across the divided areas without calling the combining processing is made by the program, it is determined that access is an unauthorized access(Fig.6A).

4. A method according to claim 1, further comprising:
executing conversion by detecting procedures across the divided areas from the program, and converting a process content of the program to call the detected procedure in the processing (16, S301∼S303).

5. A method according to claim 4, wherein in the conversion, a source code of the program is changed(16, S303).

6. A method according to claim 4 or claim 5, wherein in the conversion, an external reference procedure name of an object code of the program is changed(16, S303).

7. A method according to any of claims claim 4 to 6, wherein in the conversion, the conversion is executed before execution of the program (16, S303).

8. A method according to claim 4, wherein in the conversion, a procedure to be converted is selected from the detected procedures based on procedure definition information which specifies procedure names that are authorized to be called between the divided areas, and the selected procedure is converted (16, 109, S303).

9. A method according to any preceding claim, wherein the undivided address space is a physical address space or a virtual address space(102).

10. A method according to any preceding claim, wherein in the area definition processing, the areas are divided based on area definition information which specifies sizes of areas to be divided and modules to be arranged on the areas (Fig.14).

11. A method according to any preceding claim, wherein:
the program includes at least one module;
the areas defined in the area definition processing have at least one area including the at least one module and an area including no module; and
in the area definition processing, after the areas are divided, an access authority is set for the area including no module based on access authority definition information which specifies an access authority for each of the divided areas (S404, Fig.16).

12. A method according to any preceding claim, wherein:
the program includes at least one module;
the areas defined in the area definition processing have at least one area including the at least one module and an area including no module; and in the area definition processing, after the areas are defined, information is arranged, based on arrangement definition information which specifies information to be arranged on the area including no module, on that area (S402, Fig.15).

13. A method according to any preceding claim, wherein states of the areas divided in the area definition processing are managed in correspondence with respective tasks in an operating system (Figs.18A & B).

14. An information processing apparatus(10) for protecting a memory from an unauthorized access by a program, comprising:
an area definition processing means(11) for dividing an undivided address space on the memory into a plurality of areas;
a combining processing means(13) for temporarily combining at least two of the divided areas in response to a procedure of the program requiring access across the at least two areas;
a calling processing means(14) for calling the procedure after the areas are combined by said combining processing means; and
a restoring processing means(15) for restoring the combined areas to a state before the combining processing after execution of the procedure called by said calling processing means.

15. A program that, when executed by an information processing apparatus, causes the information processing apparatus to perform a method according to any of claims 1 to 13.

16. A storage medium storing a program according to claim 15.
